# EUROPÄISCHE PATENTANMELDUNG

(11) **EP 4 134 503 A1**
(43) Veröffentlichungstag der Anmeldung: **15.02.2023**
(21) Anmeldenummer: 21190957.7
(22) Anmeldetag: 12.08.2021
(51) Int. Cl.: E04G 15/04, F16B 47/00, E04B 1/41

(54) **WERKZEUG UND VERFAHREN FÜR BETONSCHRAUBEN IN BETONTEILEN**

(71) Anmelder: Weidner, Georg, 97854 Steinfeld (DE)
(72) Erfinder: Weidner, Georg, 97854 Steinfeld (DE)
(74) Vertreter: Götz, Georg Alois

(57) **Zusammenfassung**

Die Erfindung betrifft ein Verfahren zur Herstellung eines Betonteils (200) mit einem Schraubloch für eine Betonschraube oder mit einem Einsteckloch für einen Betonbolzen oder mit einer Verankerungshilfe für Betonschrauben oder Betonbolzen. Die Erfindung betrifft ferner das Werkzeug (100) für das Verfahren, aufweisend, ein Kopplungsmittel (110), geeignet zum Befestigen des Werkzeugs (100) an einer Verschalungswandung und mindestens einen länglichen Aussparungskörper zum Erzeugen des Lochs (210) beim Herstellen des Betonteils (200), wobei der Aussparungskörper einen Lochstift (120) umfasst und der Lochstift (120) einen konstanten oder konischen oder sich verjüngenden Querschnitt (Q) zum Erzeugen des Lochs (210) beim Herstellen des Betonteils (200) aufweist. Zum anderen weist das Kopplungsmittel (110) einen Saugnapf (111) aus elastischem Material zum Befestigen des Aussparungskörpers (120, 130, 140, 150) mittels Unterdruck an der Verschalungswandung auf und der Aussparungskörper (120, 130, 140) ist wenigstens teilweise mit Kleber und/oder Klebemörtel gebildet.

## Beschreibung

Die Erfindung betrifft ein Verfahren zur Herstellung eines Betonteils mit Schraubloch für eine Betonschraube, oder mit einem Einsteckloch für einen Betonbolzen oder mit einer Verankerungshilfe für Betonschrauben oder Betonbolzen. Die Erfindung betrifft ferner ein Werkzeug zur Bearbeitung eines noch nicht ausgehärteten Betonteils, ausgebildet zum Herstellen eines Lochs zum Eindrehen einer Betonschraube und/oder Einkleben eines Bolzens. Die Erfindung betrifft ferner ein Werkzeug zur Bearbeitung eines Betonteils, welches Werkzeug zum Bereitstellen eines Platzhalters oder einer Verankerungshilfe für Betonschrauben, Bolzen und/oder sonstige Befestigungsmittel in einem Betonteil ausgebildet ist, ein Kopplungsmittel zum Befestigen des Werkzeugs an einer Verschalungswandung und mindestens einen länglichen Aussparungskörper zum Einbetonieren in das Betonteil aufweist.

Zur Montage von externen Vorrichtungen, wie Montagestützen, Schrägstützen, Balkongeländern, Treppengeländern oder Holzbalken an Stahlbetonteilen werden Schraubverbindungen verwendet, wobei der Halt der Schraube im Beton mittels eines Dübels bzw. einer alternativen Verankerungshilfe oder durch ein selbstschneidendes Schraubengewinde einer Betonschraube realisiert ist. Betonschrauben oder Betonbolzen sind allgemein aus Metall, bspw. einsatzgehärtetem, verzinktem Kohlenstoffstahl und speziell zur Verankerung in Betonteilen ausgebildet. Vor dem Eindrehen der Betonschrauben müssen Kernlöcher in der Regel vorgebohrt werden. Als Kernloch wird allgemein eine Bohrung bezeichnet, in die ein Innengewinde geschnitten oder ein Dübel eingesetzt wird. Ein Dübel wird in der Verbindungstechnik bei Werkstoffen wie Beton angewendet, bei denen durch Eindrehen einer Schraube, bspw. einer Holzschraube, kein belastbares Schraubengewinde im Gegenstück eingeschnitten werden kann. Das Bohren von Kernlöchern auf der Baustelle hat verschiedene Nachteile. Es ist zeitaufwendig und störungsanfällig. Ein Durchbohren der Bewehrungseinlage beim Bohren des Kernlochs führt zu einer Schwächung des Bauteils. In anderen Worten, zuvor teuer eingebaute Bewehrung wird beim Anbohren zerstört. Durch den Bohrvorgang bleibt ferner Bohrmehl im Bohrloch zurück, welches die Verankerung der Schraube und/oder eines Dübels im Betonteil beeinträchtigt.

Daher ist es vorteilhaft, wenn das Bohren von Kernlöchern auf der Baustelle entfallen kann und Kernlöcher oder zumindest entsprechende Platzhalter bereits bei der Herstellung des Betonteils vorgesehen werden. Dafür wird bspw. im Fertigteilwerk an der gewünschten Stelle der Verschalungswandung ein geeignetes Einbauteil befestigt. Im Stand der Technik werden hierfür bspw. Vergussdübel aus Kunststoff oder Gewindehülsen aus Metall verwendet. Diese werden beim Einbau vorzugsweise mittels Kleber, Schmelzkleber oder Magneten einzeln von Hand auf der Stahlschalung platziert und gegebenenfalls zusätzlich angenagelt. Hierfür muss die Oberfläche der Verschalungswandung einwandfrei, d.h. sauber und eben sein.

Bekannt sind bspw. Vergussdübel für Holzschrauben von BGW-Bohr (Seite 93, Katalog der BGW Bohr GmbH:"Build something great", Seiten 1-204, URL: http://www.bgw-bohr.de/pdf/Deutsch Gesamt.pdf, zuletzt aufgerufen am 2021-07-06) und ein Doppelwanddübel von Exte (Exte GmbH, URL https://www.exte.de/schalungszubehoer/dwd/, zuletzt aufgerufen am 2021-07-06). Ebenfalls bekannt sind Kunststoffeinsätze von Pfeifer zur Montage von Schrägstützen (Seiten 1-16, Katalog der Pfeifer Seil- und Hebetechnik GmbH, URL https://www.pfeifer.info/out/assets/PFEIFER_MOFI_PPDE.PDF, zuletzt aufgerufen am 2021-07-06). Diese Kunststoffeinsätze werden in Beton einbetoniert und stellen einen Durchgang für Gewindeschrauben bereit, deren aus dem Betonfertigteil hervorstehender Schaft mit einer Gewindemutter koppelt.

Nachteilig ist, dass bei Verwendung von Kunststoffeinsätzen oder Vergussdübeln im Beton Kunststoff oder Metall einbetoniert bleibt, welches nicht wiederverwendet werden kann.

Aus dem Stand der Technik, nämlich der DE 203 12 753 U1 sind biologisch abbaubare Leerdorne aus Stärke zur Herstellung von Kernlöchern für Dübel und Betonschrauben in Betonteilen bekannt. Es ist allerdings nicht offenbart, wie die Leerdorne an der Verschalung montiert und/oder in das Betonteil eingebracht werden. Die DE 2 012 318 A betrifft die Befestigung von Einbaukörpern für Betonbauteile an Schalungen mittels Saugnapf, wobei der Saugnapf hier eine umlaufende Rinne mit V/U-Querschnitt bildet.

Es ist die Aufgabe der vorliegenden Erfindung, die Nachteile aus dem Stand der Technik zu eliminieren und die Bereitstellung eines Platzhalters für Betonschrauben, Betonschrauben oder sonstige Verankerungshilfen zu vereinfachen, insbesondere den Materialverlust zu verringern.

Die Aufgabe wird gelöst durch ein Verfahren gemäß Anspruch 1 und ein Werkzeug gemäß der Ansprüche 3, 10 und 11 gelöst. Vorteilhafte Ausgestaltungen der Erfindung ergeben sich aus den Unteransprüchen.

Eine erfindungsgemäßes Verfahren der eingangs beschriebenen Art kennzeichnet sich dadurch, dass das jeweilige Loch oder die Verankerungshilfe, im Betonteil bei dessen Herstellung gebildet wird.

Das Loch kann also bereits in Betonfertigteilwerken, aber auch Vorort auf der Baustelle beim Herstellen des Betonteils ausgebildet werden. Verankerungshilfen können im vorliegenden Fall bspw. Lochstifte, Vergussdübel oder Klebepatronen sein. Das Loch muss nicht mehr gebohrt werden, was die Bereitstellung eines Platzhalters für Betonschrauben, Betonschrauben oder sonstige Verankerungshilfen vereinfacht.

Vorzugsweise wird im Rahmen des Verfahrens zur Bildung des Lochs ein Werkzeug verwendet, welches einen länglichen, an die Form des Lochs angepassten Aussparungskörper aufweist, welcher über ein Kopplungsmittel bei der Herstellung des Betonteils an einer Verschalungswandung starr und lösbar befestigt in das Betonteil einbetoniert und nach dem Aushärten des Betonteils von diesem wieder gelöst wird.

Der Aussparungskörper dient als Platzhalter zum Eindrehen einer Betonschraube oder eines Betonbolzens. Dadurch, dass der Aussparungskörper wieder aus dem Betonteil entfernt wird, kann der Materialverlust für Platzhalter bei Verwendung selbstschneidender Betonschrauben vollständig vermieden werden.

Alternativ wird zur Bildung des Lochs ein Werkzeug verwendet, welches einen länglichen, an die Form des Lochs angepassten Aussparungskörper aufweist, der in den noch nicht ausgehärteten Beton des Betonteils gedrückt wird.

Dieses Vorgehen eignet sich besonders bei Herstellung von Betonplatten, insbesondere Betonböden, auf der Baustelle mit Vorort-Beton. Das Werkzeug kann, nach dem Eindrücken in den noch nicht ausgehärteten Beton, im Betonteil teilweise oder vollständig verbleiben oder wieder vollständig entfernt werden. Zum Verbleiben im Betonteil eignen sich insbesondere Lochhülsen oder Klebepatronen, die dann eine Verankerung für eine Holzschraube bilden können..

Die Aufgabe wird ebenfalls durch eine erfindungsgemäße Vorrichtung der eingangs beschriebenen Art gelöst und kennzeichnet sich dadurch, dass der Aussparungskörper einen Lochstift umfasst und der Lochstift einen konstanten und/oder konischen und/oder sich verjüngenden Querschnitt aufweist, sodass der Lochstift nach dem Aushärten des Betons aus dem Betonteil entnehmbar ist.

Das Werkzeug kann prinzipiell auch als Hohlraumkörper oder als einen Hohlraum erzeugender Körper bezeichnet werden. Durch die Entnahme des Lochstifts nach dem Erhärten des Betons verbleibt im Betonteil ein Hohlraum, also ein Loch, in den eine Betonschraube eingedreht werden kann. Dadurch kann bereits im Betonfertigteilwerk an der richtigen Stelle ein Platzhalter (für Dübel oder für selbstschneidende Betonschrauben) bereitgestellt werden, und das Bohren von Löchern auf der Baustelle entfällt. Die Löcher sind insbesondere als Sacklöcher oder Durchgangslöcher mit rundem Querschnitt zum Eindrehen von Betonschrauben in den ausgehärteten Beton, aber auch für andere Verankerungshilfen ausgebildet. Das Werkzeug, insbesondere das Kopplungsmittel und der Lochstift sind wiederverwendbar, wodurch weniger Material durch Einbetonieren im Betonfertigteil verloren geht. Die Entnehmbarkeit des Lochstifts wird gewährleistet, in dem der senkrecht zur Längsachse des Lochstifts angeordnete Querschnitt des Lochstifts ausgehend vom Fuß entlang der Längsachse bis hin zur Spitze kontinuierlich kleiner wird oder wenigstens gleich bleibt. Der Querschnitt wird jedenfalls nicht größer, sodass der Lochstift den Beton zumindest nicht hintergreift oder hinterschneidet. Der Lochstift ist vorzugsweise zylindrisch oder konisch ausgebildet, wobei auch die dazu im Durchmesser passende Betonschraube einen zylindrischen oder konischen Verlauf aufweisen kann. Durch das Gießen der Loch und den Verzicht auf das Bohren fällt kein störendes Bohrmehl mehr an. Dadurch ist das Loch nicht nur für Betonschrauben, sondern auch für das Einkleben von Bolzen sehr gut geeignet, weil das Bohrmehl die Klebefähigkeit nicht mehr beeinträchtigt. Für das Einkleben von Bolzen kann der Lochstift zusätzlich Längsnuten oder Längsrillen aufweisen.

Vorzugsweise weist der Lochstift oder sonstige Aussparungskörper einen Durchmesser zwischen 6 und 14 Millimetern auf.

Dieser Durchmesser ist abgestimmt auf den Kerndurchmesser typischer Betonschrauben. Eine Betonschraube kann direkt in das durch Ausgießen hergestellte Loch gedreht werden, wobei das Außengewinde der Betonschraube das Innengewinde in den das Loch umgebenden Beton schneidet. Das gegossene Loch ist in der Regel genauer als ein gebohrtes Loch. Ebenso entfällt bei gegossenen Kernlöchern gegenüber gebohrten Löchern das Reinigen von Bohrmehl.

In einer optionalen Weiterbildung ist das Kopplungsmittel als Haltescheibe ausgebildet, die mit dem Lochstift oder sonstigem Aussparungskörper einstückig und/oder lösbar verbunden ist.

Die Haltescheibe ist mittels Klebeverbindung, magnetisch haftender Verbindung oder durch Annageln und Abstecken mit der Verschalungswandung verbindbar. Durch Verwendung eines lösbar verbundenen Lochstifts ist dieser modular austauschbar. Damit kann dieselbe Haltescheibe für unterschiedliche Lochstifte und damit für unterschiedliche Betonschrauben verwendet werden.

Vorzugsweise weist das Kopplungsmittel einen Saugnapf aus elastischem Material zum Befestigen des Lochstifts oder sonstigen Aussparungskörpers mittels Unterdruck an der Verschalungswandung auf.

Ein Saugnapf weist allgemein eine gewölbte, halbkugelförmige bzw. kegelstumpfförmige Geometrie auf, aus einem elastischen Material, bspw. Kunststoff oder Gummi besteht. Durch Andrücken des Saugnapfes auf die Verschalungswandung strömt Luft aus dem Saugnapf und es entsteht ein Unterdruck zwischen dem Saugnapf und der Verschalungswandung. Der äußere Luftdruck bewirkt nun Kräfte, die den Saugnapf fest auf die Verschalungswandung anpressen. Dadurch ist ein besonders kostengünstiges und leicht wiederverwendbares Kopplungsmittel bereitgestellt.

Zum Herstellen mehrerer Löcher gleichzeitig mit einem fest vorgegebenen Abstand, Raster oder Muster weist das Kopplungsmittel eine Platte zur Aufnahme von zwei oder mehr Lochstiften auf. Dadurch wird ein fehlerhafter Abstand zweier Löcher unterbunden, der auftreten kann, wenn die Löcher einzeln gebohrt oder mit mehreren separat befestigten Werkzeugen gegossen werden müssen. Durch das Herstellen mehrerer Löcher kommt hier der Vorteil, dass durch den Wegfall des Bohrens keine Bewehrung mehr zerstört werden muss, besonders zum Tragen.

Es ist vorteilhaft, wenn auf den Aussparungskörper eine Lochhülse aufgesteckt oder in sonstiger Weise gekoppelt ist, wobei die Lochhülse im Gegensatz zum Lochstift nach dem Betonieren, bspw. als Vergussdübel, im Betonteil verbleibt. Die Lochhülse ist aus Kunststoff, Metall oder einem anderen Material ausgebildet.

Eine besonders sichere Verbindung entsteht, wenn die Lochhülse einen Kleber und/oder Klebemörtel zur Ausbildung einer Klebeverbindung mit der Betonschraube oder einem Betonbolzen aufweist.

Als Lochhülse kann auf den Lochstift eine Patrone, also eine zylindrische Hülse, mit Kleber oder Klebemörtel aufgesteckt werden. Die Lochhülse verbleibt im erhärteten Betonteil und bildet nach dem Eindrehen einer Betonschraube einen besonders sicheren Verbund zwischen dem Gewinde der Schraube und dem Betonteil. Der Kleber kann entlang der Lochhülse gleichmäßig verteilt sein oder in Form von Streifen oder Ringen in der Lochhülse angeordnet sein, wobei in den Streifen und Ringen Härter und Kleber getrennt angeordnet sind.

Die technische Aufgabe der eingangs genannten Art wird ebenfalls dadurch gelöst, dass der Aussparungskörper wenigstens teilweise mit Kleber und/oder Klebemörtel gebildet ist, wobei der Klebemörtel in das Fertigbetonteil einbetoniert wird bzw. nach dem Betonieren im erhärteten Beton verbleibt.

Der Lochstift ist als Patrone mit Kleber oder Klebemörtel ausgebildet und wird von einem Kopplungsmittel während des Betonierens an der Verschalung gehalten. Nach dem Betonieren, wenn der Beton erhärtet ist, kann das Kopplungsmittel entfernt werden und die Patrone steht zum Eindrehen einer Schraube an der vorgesehenen Stelle im Betonteil zur Verfügung. Wird die Schraube in die Patrone eingedreht zerbricht das Schraubengewinde die Ummantelung des Klebers bzw. Klebemörtels und die Gewindegänge der Schraube werden von dem Kleber bzw. Klebemörtel ausgefüllt. Man erhält nach dem Aushärten des Klebers bzw. Klebemörtels eine sichere und dauerhafte Verankerung der Schraube im Beton.

Die technische Aufgabe der eingangs genannten Art wird ebenfalls dadurch gelöst, dass das Kopplungsmittel einen Saugnapf aus elastischem Material zum Befestigen des Aussparungskörpers mittels Unterdruck an der Verschalungswandung aufweist.

Der Saugnapf soll verwendet werden, um Aussparungskörper, bspw. für Betonschrauben, an der Verschalungswandung zu befestigen und während des Einfüllens von fließfähigem Beton an der vorgegebenen Position zu halten. Die Befestigung bereits bekannter Vergussdübel an der Verschalungswandung wird somit vereinfacht. Dafür ist der Saugnapf stirnseitig, d.h. mit dem Fuß des Aussparungskörpers verbunden. Als Aussparungskörper, die mittels Saugnapf an der Verschalungswandung befestigt werden können, eignen sich besonders gut bereits beschriebene Lochstifte, Lochhülsen, Lochhülsen mit Kleber und/oder Klebemörtel, bereits bekannte Vergussdübel oder Gewindehülsen. Die Aussparungskörper können aus Kunststoff oder Metall gefertigt sein. Werden die Aussparungskörper in das Betonfertigteil eingegossen und verbleiben im erhärteten Beton, können direkt die Schrauben oder sonstigen Befestigungsvorrichtungen eingedreht werden.

In einer bevorzugten Ausführungsform der Erfindung sind der Aussparungskörper und der Saugnapf einstückig ausgebildet.

Hier ist zwar die Herstellung als Kunststoffspritzgussteil besonders günstig und zugleich materialsparend, allerdings ist der Saugnapf für eine Wiederverwendung verloren. Bei mehrteiliger Ausbildung von Saugnapf und Aussparungskörper kann der Saugnapf wiederverwendet werden. Der Saugnapf kann dafür einen Zapfen oder ein sonstiges Verbindungsmittel zum Verbinden mit dem Aussparungskörper aufweisen. Der Saugnapf kann aber auch selbst ein Außengewinde aufweisen zum

Aufdrehen von Teilen mit Innengewinden, z.B. Gewindehülsen.

Weitere Einzelheiten, Merkmale, Merkmals(unter) kombinationen, Vorteile und Wirkungen auf der Basis der Erfindung ergeben sich aus der nachfolgenden Beschreibung eines bevorzugten Ausführungsbeispiels *{bzw. -beispiele}* der Erfindung und den Zeichnungen. Diese zeigen in
- Fig. 1: eine perspektivische Darstellung eines Werkzeugs in einer ersten beispielhaften Ausführungsform der Erfindung, in
- Fig. 2: eine perspektivische Darstellung einer Anordnung in einer beispielhaften Ausführungsform der Erfindung, in
- Fig. 3: eine perspektivische Darstellung eines Werkzeugs in einer zweiten beispielhaften Ausführungsform der Erfindung, in
- Fig. 4: eine Prinzipskizze eines Werkzeugs in einer dritten beispielhaften Ausführungsform der Erfindung, in
- Fig. 5: eine perspektivische Darstellung eines Werkzeugs in einer vierten beispielhaften Ausführungsform der Erfindung, in und
- Fig. 6: eine perspektivische Darstellung eines Werkzeugs in einer fünften beispielhaften Ausführungsform der Erfindung.

Die Figuren sind lediglich beispielhafter Natur und dienen nur dem Verständnis der Erfindung. Die gleichen Elemente sind mit denselben Bezugszeichen versehen.

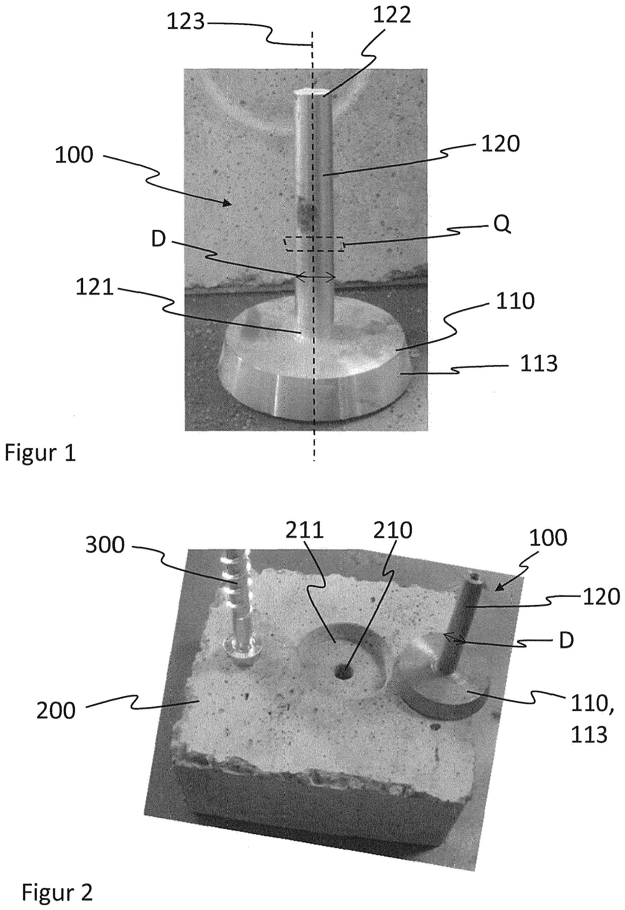

Fig. 1 zeigt ein Werkzeug 100 bzw. Hohlraumkörper mit einer Haltescheibe 113 als Kopplungsmittel 110 zum Befestigen des Werkzeugs 100 an einer nicht gezeigten Verschalungswandung und einen länglichen Lochstift 120 als Aussparungskörper mit einem Fuß 121, einer Spitze 122, einer Längsachse 123, einem Querschnitt Q und einem Durchmesser D zum Erzeugen des Lochs 210 im Betonteil 200 (vgl. Fig. 2). Der Lochstift 120 weist einen leicht konischen Verlauf auf, d.h. die Fläche des Querschnitts Q und der Durchmesser D nehmen vom Fuß 121 zur Spitze 122 kontinuierlich ab. Der Lochstift 120 ist am Fuß 121 mit dem Kopplungsmittel 110 verbunden, während die Spitze 122 freisteht. Die Haltescheibe 113 bildet selbst einen weiteren Aussparungskörper des Werkzeugs 100. Die Längsachse 123 des Lochstifts 120 bildet die Rotationsachse des rotationssymmetrischen Lochstifts 120 bzw. des gesamten Werkzeugs 100.

In Fig. 2 ist das Loch 210 nach dem Betonieren gezeigt, nachdem das Werkzeug 100 aus dem Betonteil 200 entnommen worden ist. Das Kopplungsmittel 110 und der Lochstift 120 sind wiederverwendbar, sodass bei Verwendung einer selbstschneidenden Betonschraube 300 kein Material durch Einbetonieren im Betonteil 200 verloren geht. Das Loch 210 ist gegenüber der Betonoberfläche vertieft bzw. eingesenkt im Betonteil 200 angeordnet, wobei die Einsenkung 211 passgenau der Geometrie der Haltescheibe 113 entspricht. Der Durchmesser D des Lochstifts 120 entspricht dem Durchmesser des Lochs 210 im Betonteil 200. Der Durchmesser D beträgt vorzugsweise zwischen 6 und 14 Millimetern und entspricht damit dem Kernbohrlochdurchmesser von Betonschrauben 300. Zur Bereitstellung eines Kernbohrlochs ist der Lochstift 120 und damit das Loch 210 länger als die passende Betonschraube 300. Anstelle einer selbstschneidenden Betonschraube 300 kann man in die Löcher 210 auch Dübel aller Art einsetzen.

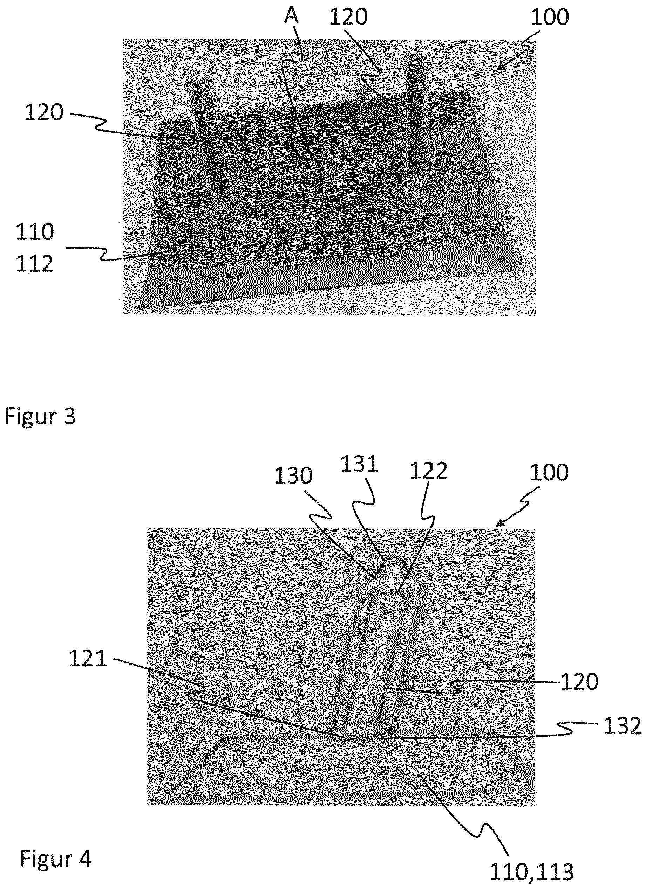

Fig. 3 zeigt ein Werkzeug 100 mit einer Platte 112 zur Aufnahme von zwei Lochstiften 120 im Abstand A. Dadurch kann zusätzlich der Abstand A der Löcher 210 (vgl. Figur 2) im Betonteil 200 festgelegt werden. Die Platte 112 kann in der Fläche und in der Anzahl der darauf montierten Lochstifte 120 beliebig erweitert werden. Die Lochstifte 120 werden quasi mit einer Schablone zusammengehalten. Eine Stütze mit bspw. 4 Schrauben lässt sich dadurch besonders einfach und schnell montieren. Anstelle der Verwendung einer Platte 112 können die Werkzeuge 100 mittels Absteckbilder aus Papier oder Folie oder sonstige Schablonen an der Verschalungswandung nach einem vorgegebenen Muster platziert werden. Auch beim Betonieren einer Bodenplatte mit Vorort-Beton kann an der Stelle, an der bspw. eine Stütze gesetzt werden soll, eine Platte 112 mit einigen Platzhaltern oder Aussparungskörpern oder Lochstiften 120 zum späteren Befestigen der Stützen, in den frischen Beton gedrückt, quasi "gestempelt", werden. Nachdem der Beton gehärtet ist und die Wände gestellt werden, kann das passende Loch aus der Anordnung zum Befestigen der Stützen mimt Betonschrauben ausgewählt werden.

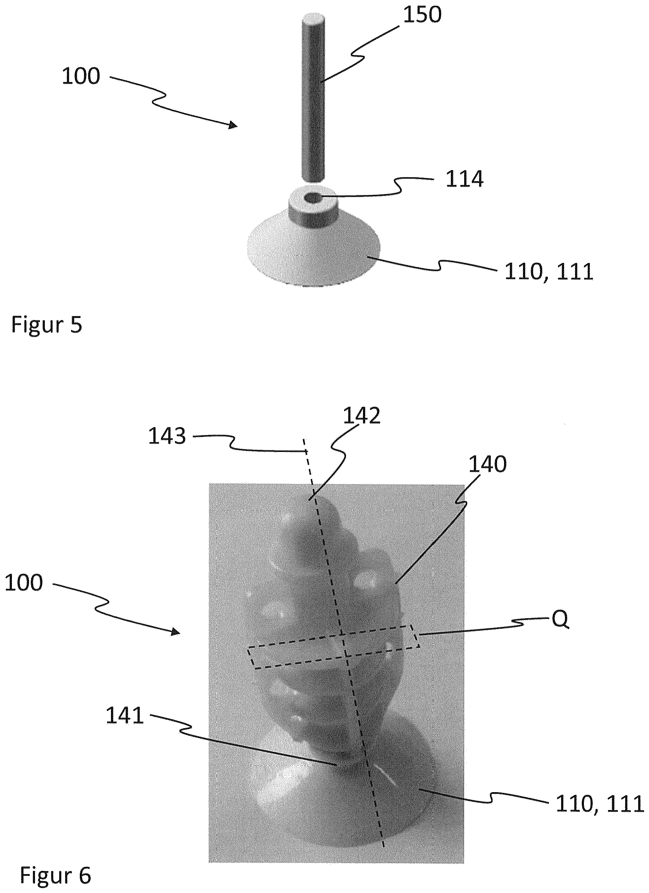

Fig. 4 zeigt ein Werkzeug 100 mit einer Haltescheibe 113 und einem Lochstift 120 gemäß Figur 1 und zusätzlich einer Lochhülse 130, die im Bereich einer ersten Stirnseite 131 verschlossen und im Bereich einer zweiten Stirnseite 132 offen ist. Die zweite Stirnseite 132 der Lochhülse 130 ist bis zur Haltescheibe 113 auf den Lochstift 120 aufgeschoben, wobei die Lochhülse 130 mit dem Lochstift 120 einen Reibschluss ausbilden kann (nicht dargestellt), der den Innenraum der Lochhülse 130 gegenüber fließfähigem Beton oder Betonmilch abdichtet. Nachdem der Beton ausgehärtet ist, kann die Lochhülse 130 als Dübel oder Vergussdübel (vgl. Fig. 6) im Betonteil 200 verbleiben, während der Lochstift 120 entfernt und wiederverwendet werden kann. Diese Lochhülse 130 kann man auch von Hand oder mit Hilfe des Lochstifts 120 in den noch weichen Beton stecken, um dann eine Schraube einzudrehen. Eine solche Lochhülse 130 in den weichen Beton zu stechen ist viel einfacher, als in den harten Beton ein Loch zu bohren.

Fig. 5 zeigt ein Werkzeug 100, bei dem das Kopplungsmittel 110 ein Saugnapf 111 und der Aussparungskörper eine Klebepatrone 150 mit Kleber oder Klebemörtel ist. Der Saugnapf 111 weist eine Verbindungsstelle 114 zum lösbaren Verbinden der Klebepatrone 150 auf, wobei die Verbindungsstelle 114 mittels einer Steckverbindung und/oder einer Gewindeverbindung realisierbar ist. Der Saugnapf 111 kann nach dem Betonieren demontiert und wiederverwendet werden. Anstelle der Klebehülse 150 könnte entsprechend auch eine Lochhülse 130 (vgl. Fig. 4) verwendet werden. Diese kann auch einstückig mit dem Saugnapf 111 ausgebildet sein.

Fig. 6 zeigt ein Werkzeug 100, bei dem das Kopplungsmittel 110 ein Saugnapf 111 und der Aussparungskörper ein Vergussdübel 140 ist, dessen Querschnitt Q vom Fuß 141 bis zur Spitze 142 entlang der Mittelachse 143 zunimmt bzw. abwechselnd abnimmt und zunimmt, sodass der Vergussdübel 140 von fließfähigem Beton umströmt, hintergriffen und darin fest verankert wird. Der Saugnapf 111 ist einstückig mit dem Vergussdübel 140 verbunden, sodass der Saugnapf 111 nach dem Betonieren nicht wiederverwendet werden kann, sondern bspw. beim Eindrehen einer Schraube, bspw. Holzschraube, zerstört wird.

### Bezugszeichenliste

- 100: Werkzeug, insbesondere Hohlraumkörper
- 110: Kopplungsmittel
- 111: Saugnapf
- 112: Platte
- 113: Haltescheibe
- 114: Verbindungsstelle
- 120: Lochstift
- 121: Fuß
- 122: Spitze
- 123: Längsachse
- 130: Lochhülse
- 131: erste Stirnseite
- 132: zweite Stirnseite
- 140: Vergussdübel
- 141: Fuß
- 142: Spitze
- 143: Mittelachse
- 150: Klebepatrone
- 200: Betonfertigteil
- 210: Loch, Kernloch
- 211: Einsenkung
- 300: Betonschraube
- A: Abstand
- D: Durchmesser Lochstift/Loch
- Q: Querschnitt

## Patentansprüche

1. Verfahren zur Herstellung eines Betonteils (200) mit einem Schraubloch für eine Betonschraube (300), oder mit einem Einsteckloch für einen Betonbolzen oder mit einer Verankerungshilfe für Betonschrauben (300) oder Betonbolzen,
**dadurch gekennzeichnet, dass**
das jeweilige Loch (210) oder die Verankerungshilfe im Betonteil (200) bei dessen Herstellung gebildet wird.

2. Herstellungsverfahren nach Anspruch 1,
**dadurch gekennzeichnet, dass**
zur Bildung des Lochs (210) ein Werkzeug (100) verwendet wird, welches einen länglichen, an die Form des Lochs (120) angepassten Aussparungskörper aufweist, der über ein Kopplungsmittel (110) bei der Herstellung des Betonteils (200) an einer Verschalungswandung starr und lösbar befestigt in das Betonteil (200) einbetoniert und nach dem Aushärten des Betonteils (200) von diesem wieder gelöst wird.

3. Herstellungsverfahren nach Anspruch 1,
**dadurch gekennzeichnet, dass**
zur Bildung des Lochs (210) ein Werkzeug (100) verwendet wird, welches einen länglichen, an die Form des Lochs (120) angepassten Aussparungskörper aufweist, der in den noch nicht ausgehärteten Beton des Betonteils (200) gedrückt wird.

4. Werkzeug (100) zur Bearbeitung eines noch nicht ausgehärteten Betonteils (200), insbesondere als Mittel zur Durchführung des Verfahrens nach einem der Ansprüche 1-3, welches Werkzeug (100) zum Herstellen eines Lochs (210) zum Eindrehen einer Betonschraube (300) und Einschieben und Einkleben eines Bolzens ausgebildet ist,
**dadurch gekennzeichnet, dass** das Werkzeug (100) aufweist,
• ein Kopplungsmittel (110), geeignet zum Befestigen des Werkzeugs (100) an einer Verschalungswandung oder einer sonstigen Halterung
und
• mindestens einen länglichen Aussparungskörper zum Erzeugen des Lochs (210) beim Herstellen des Betonteils (200),
wobei der Aussparungskörper einen Lochstift (120) umfasst und der Lochstift (120) einen konstanten oder konischen oder sich verjüngenden Querschnitt (Q) zum Erzeugen des Lochs (210) beim Herstellen des Betonteils (200) aufweist.

5. Werkzeug (100) nach Anspruch 4,
**dadurch gekennzeichnet, dass**
der Lochstift (120) oder sonstige Aussparungskörper einen Durchmesser (D) zwischen 6 und 14 Millimetern aufweist.

6. Werkzeug (100) nach einem der Ansprüche 4 oder 5,
**dadurch gekennzeichnet, dass**
das Kopplungsmittel (110) eine Haltescheibe (113) aufweist, die mit dem Lochstift (120) oder sonstigen Aussparungskörper einstückig und/oder lösbar verbunden ist.

7. Werkzeug (100) nach einem der Ansprüche 4-6,
**dadurch gekennzeichnet, dass**
das Kopplungsmittel (110) einen Saugnapf (111) aus elastischem Material zum Befestigen des Lochstifts (120) oder sonstigen Aussparungskörper mittels Unterdruck an der Verschalungswandung aufweist.

8. Werkzeug (100) nach einem der Ansprüche 4-7,
**dadurch gekennzeichnet, dass**
das Kopplungsmittel (110) eine Platte (112) zur Aufnahme von zwei oder mehr Lochstiften (120) oder sonstigen Aussparungskörpern aufweist.

9. Werkzeug (100) nach einem der Ansprüche 4-8,
**dadurch gekennzeichnet, dass**
auf den Lochstift (120) oder sonstigen Aussparungskörper eine Lochhülse (130) aufgesteckt oder in sonstiger Weise gekoppelt ist.

10. Werkzeug (100) nach Anspruch 9,
**dadurch gekennzeichnet, dass**
die Lochhülse (130) einen Kleber und/oder Klebemörtel zur Ausbildung einer Klebeverbindung mit der Betonschraube (300) oder einem Betonbolzen aufweist.

11. Werkzeug (100) zur Bearbeitung eines Betonteils (200), welches Werkzeug (100) zum Bereitstellen eines Platzhalters oder einer Verankerungshilfe für Betonschrauben (300), Bolzen und/oder sonstige Befestigungsmittel in einem Betonteil (200) ausgebildet ist und aufweist
• ein Kopplungsmittel (110) zum Befestigen des Werkzeugs (100) an einer Verschalungswandung und
• mindestens einen länglichen Aussparungskörper (120, 130, 140) zum Einbetonieren in das Betonteil (200),
**dadurch gekennzeichnet, dass**
der Aussparungskörper (120, 130, 140) wenigstens teilweise mit Kleber und/oder Klebemörtel gebildet ist oder eine Klebepatrone (150) umfasst.

12. Werkzeug (100) zur Bearbeitung eines Betonteils, welches Werkzeug (100) zum Bereitstellen eines Platzhalters oder einer Verankerungshilfe für Betonschrauben (300), Bolzen und/oder sonstige Befestigungsmittel in einem Betonteil (200) ausgebildet ist und aufweist
• ein Kopplungsmittel (110) zum Befestigen des Werkzeugs (100) an einer Verschalungswandung und
• mindestens einen länglichen Aussparungskörper (120, 130, 140, 150) zum Einbetonieren in das Betonteil (200),
**dadurch gekennzeichnet, dass**
das Kopplungsmittel (110) einen Saugnapf (111) aus elastischem Material zum Befestigen des Aussparungskörpers (120, 130, 140, 150) mittels Unterdruck an der Verschalungswandung aufweist.

13. Werkzeug (100) nach Anspruch 12, **dadurch gekennzeichnet, dass** der Aussparungskörper (120, 130, 140, 150) einen Lochstift (120), eine Lochhülse (130), einen Vergussdübel (140) oder eine Gewindehülse aufweist.

14. Werkzeug (100) nach einem der Ansprüche 12 oder 13, **dadurch gekennzeichnet, dass** der Aussparungskörper (120, 130, 140, 150) einen Kleber und/oder Klebemörtel zur Ausbildung einer Klebeverbindung mit der Betonschraube (300) aufweist.

15. Werkzeug (100) nach einem der Ansprüche 12-14, **dadurch gekennzeichnet, dass** der Aussparungskörper (120, 130, 140, 150) und der Saugnapf (111) einstückig ausgebildet sind.
